# EUROPEAN PATENT APPLICATION

(11) **EP 4 815 120 A1**
(43) Date of publication of application: **30.09.2026**
(21) Application number: 24894260.9
(22) Date of filing: 29.03.2024
(51) Int. Cl.: H01M 50/102, H01M 50/148, H01M 10/058, B23K 26/21

(54) **ALL-SOLID RECHARGEABLE BATTERY**

(30) Priority: 24.11.2023 KR 20230166067
(71) Applicant: SAMSUNG SDI CO., LTD., Yongin-si, Gyeonggi-do 17084 (KR)
(72) Inventor: KIM, Joonghun, Yongin-si, Gyeonggi-do 17084 (KR)
(74) Representative: Michalski Hüttermann & Partner mbB
(86) International application number: PCT/KR2024/004049
(87) International publication number: WO 2025/110362

(57) **Abstract**

An all-solid rechargeable battery includes: an all-solid-state cell stack; a first can configured to cover a lower portion of the all-solid-state cell stack; a second can configured to cover an upper portion of the all-solid-state cell stack and to be welded to the first can to press the all-solid-state cell stack in a direction of the first can; and a first cap configured to cover a first side portion of the all-solid-state cell stack and into which the first can and the second can are inserted, wherein the first can includes: a first welding surface welded to the second can; and a first non-welding surface non-welded to the second can and configured to extend from the first welding surface in the direction of the first cap to be inserted into the first cap.

## Description

### [Technical Field]

The present disclosure relates to an all-solid rechargeable battery.

### [Background Art]

Recently, as an explosion risk of batteries using liquid electrolytes has been reported, development of all-solid rechargeable batteries is being conducted. An all-solid rechargeable battery is a battery in which all materials are made of solid, and refers to a battery that uses a solid electrolyte. Such all-solid rechargeable batteries are safe as there is no risk of explosion due to electrolyte leakage, and have an advantage of being easy to manufacture thin batteries. The all-solid rechargeable battery may have to minimize interfacial resistance between stacks that make up the all-solid rechargeable battery (e.g., interfacial resistance between an electrode and a solid electrolyte layer, due to a nature of the all-solid rechargeable battery, which is formed entirely of solid materials.

### [Disclosure]

### [Technical Problem]

An embodiment attempts to provide an all-solid rechargeable battery with minimized interfacial resistance even in a case where an all-solid-state cell stack is wrapped by a can.

### [Technical Solution]

An aspect of the present disclosure provides an all-solid rechargeable battery including: an all-solid-state cell stack; a first can configured to cover a lower portion of the all-solid-state cell stack; a second can configured to cover an upper portion of the all-solid-state cell stack and to be welded to the first can to press the all-solid-state cell stack in a direction of the first can; and a first cap configured to cover a first side portion of the all-solid-state cell stack and into which the first can and the second can are inserted, wherein the first can includes: a first welding surface welded to the second can; and a first non-welding surface non-welded to the second can and configured to extend from the first welding surface in the direction of the first cap to be inserted into the first cap.

The first non-welding surface may extend at an angle away from the second can from the first welding surface.

At least a portion of the first non-welding surface may be in non-contact with the second can.

A distance between the first non-welding surface and the second can may have a first length when the all-solid-state cell stack is pressed, and if the first non-welding surface is inserted into the first cap, it may have a second length that is longer than the first length due to a restoring force of the first can.

The first welding surface may include an uneven structure extending in a direction of the first non-welding surface.

The uneven structure of the first welding surface may include a convex surface.

The uneven structure of the first welding surface may include a triangular surface.

The first welding surface may include a step structure recessed from a direction of the second can.

The step structure of the first welding surface may include a first blocking wall positioned between the second can and the all-solid-state cell stack.

It may further include a second cap configured to cover a second side portion of the all-solid-state cell stack and into which the first can and the second can are inserted.

The first non-welding surface may extend from the first welding surface in the direction of the second cap to be inserted into the second cap.

The first can may include: a first plate portion configured to cover a lower portion of the all-solid-state cell stack; and a first side wall portion bent and extended from the first plate portion to surround the all-solid-state cell stack, where the first welding surface and the first non-welding surface are positioned.

The second can may include: a second welding surface welded to the first welding surface of the first can; and a second non-welding surface non-welded to the first non-welding surface of the first can and configured to extend from the second welding surface in the direction of the first cap to be inserted into the first cap.

The second non-welding surface may extend at an angle away from the first non-welding surface of the first can.

At least a portion of the second non-welding surface may be in non-contact with the first non-welding surface of the first can.

A distance between the second non-welding surface and the first non-welding surface may have a first length when the all-solid-state cell stack is pressed, and if the second non-welding surface and the first non-welding surface are inserted into the first cap, it may have a second length that is longer than the first length due to a restoring force of the second can and the first can.

An interface between the second welding surface and the first welding surface may include an uneven structure extending in the direction of the first cap.

The second welding surface may include a step structure recessed from a direction of the first can.

The step structure of the second welding surface may include welding surface may include a second blocking wall positioned between the first can and the all-solid-state cell stack.

The second can may further include: a second plate portion configured to cover an upper portion of the all-solid-state cell stack; and a second side wall portion bent and extended from the second plate portion to surround the all-solid-state cell stack, where the second welding surface and the second non-welding surface are positioned.

### [Advantageous Effects]

According to an embodiment, an all-solid rechargeable battery with minimized interfacial resistance is provided even in a case where an all-solid-state cell stack is wrapped by a can.

### [Description of the Drawings]

FIG. 1 illustrates a cross-sectional view of an all-solid-state battery.
FIG. 2 illustrates a cross-sectional view of an all-solid-state battery including a precipitated negative electrode.
FIG. 3 illustrates a perspective view showing an all-solid rechargeable battery according to an embodiment.
FIG. 4 illustrates a cross-sectional view taken along a line IV-IV of FIG. 3.
FIG. 5 illustrates a cross-sectional view taken along a line V-V of FIG. 3.
FIG. 6 illustrates a perspective view showing an example of coupling a first cap to side portions of a first can and a second can in an all-solid rechargeable battery according to an embodiment.
FIG. 7 illustrates a perspective view showing an all-solid rechargeable battery according to another embodiment.
FIG. 8 illustrates a perspective view showing an all-solid rechargeable battery according to another embodiment.
FIG. 9 illustrates a perspective view showing an all-solid rechargeable battery according to another embodiment.
FIG. 10 illustrates a cross-sectional view taken along a line X-X of FIG. 9.
FIG. 11 illustrates a partial cross-sectional view showing welding using a laser beam between3 first and second welding surfaces of an all-solid rechargeable battery according to another embodiment shown in FIG. 10.
FIG. 12 illustrates a cross-sectional view showing an all-solid rechargeable battery according to another embodiment.
FIG. 13 illustrates a perspective view showing an all-solid rechargeable battery according to another embodiment.
FIG. 14 illustrates a perspective view showing an all-solid rechargeable battery according to another embodiment.
FIG. 15 illustrates a cross-sectional view taken along a line XV-XV of FIG.

### [Mode for Invention]

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure.

In addition, unless explicitly described to the contrary, the word "comprise" and variations such as "comprises" or "comprising" will be understood to imply the inclusion of stated elements but not the exclusion of any other elements.

In the drawings, the thickness is enlarged to clearly express various layers and areas, and like reference numerals designate like elements throughout the specification. It will be understood that when an element such as a layer, film, area, or substrate is referred to as being "on" another element, it can be directly on the other element or intervening elements may also be present. In contrast, when an element is referred to as being "directly on" another element, there are no intervening elements present.

In addition, herein, "layer" includes not only a shape formed on an entire surface when observed in a plan view, but also a shape formed on some surfaces. Herein, "or" is not interpreted in an exclusive sense, and for example, "A or B" is interpreted as including A, B, A+B, etc.

### Positive electrode for all-solid rechargeable battery

In an embodiment, in a positive electrode for an all-solid rechargeable battery including a current collector and a positive active material layer disposed on the current collector, the positive active material layer provides a positive electrode for an all-solid rechargeable battery including at least one of a positive active material, a sulfide-based solid electrolyte, a binder, or a conductive material. However, the present disclosure is not limited thereto, and the positive electrode for an all-solid rechargeable battery may include more or fewer components than the components described above.

In an embodiment, the positive electrode for an all-solid rechargeable battery is manufactured by applying a positive electrode composition containing at least one of a positive active material, a sulfide-based solid electrolyte, a binder, or a conductive material to a current collector, followed by drying and rolling.

### Positive active material

The positive electrode active material may be applied without limitation as long as it is commonly used in all-solid rechargeable batteries. For example, the positive active material may be a compound capable of reversible intercalation and deintercalation of lithium, and may include a compound represented by any of the following chemical formulas.

LiₐA_{1-b}X_{b}D₂ (0.90 ≤ a ≤ 1.8, 0 ≤ b ≤ 0.5);

LiₐA_{1-b}X_{b}O_{2-c}D_{c} (0.90 ≤ a ≤ 1.8, 0 ≤ b ≤ 0.5, 0 ≤ c ≤ 0.05);

LiₐE_{1-b}X_{b}O_{2-c}D_{c} (0.90 ≤ a ≤ 1.8, 0 ≤ b ≤ 0.5, 0 ≤ c ≤ 0.05);

LiₐE_{2-b}X_{b}O_{4-c}D_{c} (0.90 ≤ a ≤ 1.8, 0 ≤ b ≤ 0.5, 0 ≤ c ≤ 0.05);

LiₐNi_{1-b-c}Co_{b}X_{c}D_{α} (0.90 ≤ a ≤1.8, 0 ≤ b ≤ 0.5, 0 ≤ c ≤ 0.5, 0 <α ≤ 2);

LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 <α <2);

LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 <α <2);

LiₐNi_{1-b-c}Mn_{b}X_{c}D_{α} (0.90 ≤ a ≤ 1.8, 0 ≤ b ≤ 0.5, 0 ≤ c ≤ 0.05, 0 <α ≤ 2);

LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 <α < 2);

LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 <α < 2);

LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1);

LiₐNiG_{b}O₂ (0.90 ≤ a ≤ 1.8, 0.001 ≤ b ≤ 0.1);

LiₐCoG_{b}O₂ (0.90 ≤ a ≤ 1.8, 0.001 ≤ b ≤ 0.1);

LiₐMn_{1-b}G_{b}O₂ (0.90 ≤ a ≤ 1.8, 0.001 ≤ b ≤ 0.1);

LiₐMn₂G_{b}O₄ (0.90 ≤ a ≤ 1.8, 0.001 ≤ b ≤ 0.1);

LiₐMn_{1-g}G_{g}PO₄ (0.90 ≤ a ≤ 1.8, 0 ≤ g ≤ 0.5);

QO₂; QS₂; LiQS₂;

V₂O₅; LiV₂O₅;

LiZO₂;

LiNiVO₄;

Li _{(3-f)}J₂ PO₄₃ (0 ≤ f ≤ 2);

Li _{(3-f)}Fe₂ PO₄₃ (0 ≤ f ≤ 2);

LiₐFePO₄ (0.90 ≤ a ≤ 1.8).

In the above formulas, A is selected from Ni, Co, Mn, and a combination thereof; X is selected from Al, Ni, Co, Mn, Cr, Fe, Mg, Sr, V, rare earth elements, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The positive electrode active material may be, e.g., lithium cobalt oxide (LCO), lithium nickel oxide (LNO), lithium nickel cobalt oxide (NC), lithium nickel cobalt aluminum oxide (NCA), lithium nickel cobalt manganese oxide (NCM), lithium nickel manganese oxide (NM), lithium manganese oxide (LMO), or lithium Iron phosphate (LFP).

The positive active material may include lithium nickel-based oxide represented by Formula 1 below, lithium cobalt-based oxide represented by Formula 2 below, lithium iron phosphate-based compound represented by Formula 3 below, or a combination thereof.

[Chemical Formula 1] Liₐ₁Niₓ₁M¹_{y1}M²_{1-x1-y1}O₂

In Formula 1, 0.9≤a1≤1.8, 0.3≤x1≤1, and 0≤y1≤0.7, and M¹ and M² may each independently include one or more elements selected from Al, B, Ba, Ca, Ce, Co, Cr, Cu, F, Fe, Mg, Mn, Mo, Nb, P, S, Si, Sr, Ti, V, W, and Zr.

[Chemical Formula 2] Liₐ₂Coₓ₂M³₁₋ₓ₂O₂

In Formula 2, 0.9≤a2≤1.8 and 0.6≤x2≤1, and M³ may include one or more elements selected from Al, B, Ba, Ca, Ce, Co, Cr, Cu, F, Fe, Mg, Mn, Mo, Nb, P, S, Si, Sr, Ti, V, W, and Zr.

[Chemical Formula 3] Liₐ₃Feₓ₃M⁴ ₁₋ₓ₃PO₄

In Formula 3, 0.9≤a3≤1.8 and 0.6≤x3≤1, and M⁴ may include one or more elements selected from Al, B, Ba, Ca, Ce, Co, Cr, Cu, F, Fe, Mg, Mn, Mo, Nb, P, S, Si, Sr, Ti, V, W, and Zr.

An average particle diameter (D50) of the positive active material may be 1 µm to 25 µm, e.g., 3 µm to 25 µm, 5 µm to 25 µm, 5 µm to 20 µm, 8 µm to 20 µm, or may be 10 µm to 18 µm. A positive active material having this particle size range may be harmoniously mixed with other components within the positive active material layer, and may achieve high capacity and high energy density.

The positive active material may be in the form of secondary particles made by agglomerating a plurality of primary particles, or may be in the form of single particles. Additionally, the positive active material may be spherical or close to a spherical shape, or may be polyhedral or amorphous.

### Sulfide-based solid electrolyte

Sulfide-based solid electrolytes may include, e.g., Li₂S-P₂S₅, Li₂S-P₂S₅-LiX (X is a halogen element, for example I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m, n are each integer and Z is Ge, Zn or Ga), Li₂S-GeS₂, Li₂S-SiS₂-Li₃PO₄, Li₂S-SiS₂-LiₚMO_{q} (p, q are integers, M is P, Si, Ge, B, Al, Ga or In), or a combination thereof.

Such sulfide-based solid electrolyte may be obtained by mixing, e.g., Li₂S and P₂S₅ at a molar ratio of 50:50 to 90:10, or 50:50 to 80:20 and optionally heat treating it. Within the above mixing ratio range, a sulfide-based solid electrolyte having excellent ionic conductivity may be manufactured. Herein, as another component, SiS₂, GeS₂, B₂S₃, etc. may be included more to further improve ionic conductivity.

Mechanical milling or solution method may be applied as a method of mixing sulfur-containing raw materials to produce a sulfide-based solid electrolyte. The mechanical milling is a method of mixing starting materials into fine particles by placing the starting materials and a ball mill in a reactor and stirring strongly. When using the solution method, solid electrolyte may be obtained as a precipitate by mixing the starting materials in a solvent. Additionally, if heat treatment is performed after mixing, the crystals of the solid electrolyte may become more solid and ionic conductivity may be improved. For example, a sulfide-based solid electrolyte may be manufactured by mixing sulfur-containing raw materials and heat treating it more than twice, and in this case, a sulfide-based solid electrolyte with high ionic conductivity and robustness may be manufactured.

For example, particles of the sulfide-based solid electrolyte may include argyrodite-type sulfide. The argyrodite-type sulfide may be represented by, e.g., a chemical formula of LiₐM_{b}P_{c}S_{d}Aₑ (a, b, c, d and e are all between 0 and 12, M is a metal other than Li or a combination of a plurality of metals other than Li, A is F, Cl, Br, or I), e.g., Li₇₋ₓPS₆₋ₓAₓ (x is 0.2 or more and 1.8 or less, and A is F, Cl, Br, or I). Specifically, the azirodite-type sulfide may be Li₃PS₄, Li₇P₃S₁₁, Li₇PS₆, Li₆PS₅Cl, Li₆PS₅Br, Li_{5.8}PS_{4.8}Cl_{1.2}, Li_{6.2}PS_{5.2}Br_{0.8}, etc.

Particles of the sulfide-based solid electrolyte containing such azirodite-type sulfide may have a high ionic conductivity close to the range of 10-4 to 10-2 S/cm, which is the ionic conductivity of a general liquid electrolyte at room temperature, may form a tight bond between the positive active material and the solid electrolyte without causing a decrease in ionic conductivity, and may further form a tight interface between the electrode layer and the solid electrolyte layer. All-solid-state batteries containing this may have improved battery performance such as rate characteristics, coulombic efficiency, and lifespan characteristics.

The ajirodite-type sulfide-based solid electrolyte may be prepared, e.g., by mixing lithium sulfide, phosphorus sulfide, and optionally lithium halide. After mixing them, heat treatment may be performed. The heat treatment may include, e.g., two or more heat treatment steps.

An average particle diameter (D50) of the particles of the sulfide-based solid electrolyte according to an embodiment may be 5.0 µm or less, e.g., 0.1 µm to 5.0 µm, 0.1 µm to 4.0 µm, 0.1 µm to 3.0 µm, 0.5 µm to 2.0 µm, or may be 0.1 µm to 1.5 µm. Alternatively, the particles of the sulfide-based solid electrolyte may be small particles with an average particle diameter (D50) of 0.1 µm to 1.0 µm, or large particles with an average particle diameter (D50) of 1.5 µm to 5.0 µm, depending on a position or purpose of use. Particles of the sulfide-based solid electrolyte in this particle size range may effectively penetrate between solid particles within a battery, and may have excellent contact with electrode active materials and connectivity between solid electrolyte particles. The average particle diameter of the particles of the sulfide-based solid electrolyte may be measured using a microscope image, and for example, it may be obtained by measuring a size of about 20 particles in a scanning electron microscope image, obtaining a particle size distribution, and calculating D50 therefrom.

A content of the solid electrolyte in a positive electrode for an all-solid-state battery may be 0.5 wt% to 35 wt%, for example, 1 wt% to 35 wt%, 5 wt% to 30 wt%, 8 wt% to 25 wt. %, or 10 wt% to 20 wt%. This is a content relative to a total weight of the components in the positive electrode, and specifically, it may be said to be a content relative to a total weight of the positive active material layer.

In an embodiment, the positive active material layer may include 50 wt% to 99.35 wt% of the positive active material with respect to 100 wt% of the positive electrode active material layer, 0.5 wt% to 35 wt% of the sulfide-based solid electrolyte, 0.1 wt% to 10 wt% of a fluorine-based resin binder, and 0.05 wt% to 5 wt% of vanadium oxide. If this content range is satisfied, the positive electrode for an all-solid rechargeable battery may achieve high capacity and high ionic conductivity while maintaining high adhesion, and viscosity of the positive electrode composition may be maintained at an appropriate level, thereby improving processability.

### Binder

The binder helps the particles of the positive active material adhere to each other and also serves to adhere the positive electrode active material to the current collector, representative examples of which include polymers including polyvinyl alcohol, carboxymethylcellulose, hydroxypropylcellulose, diacetylcellulose, polyvinyl chloride, carboxylated polyvinyl chloride, polyvinyl fluoride, ethylene oxide, polyvinylpyrrolidone, polyurethane, polytetrafluoroethylene, polyvinylidene fluoride, polyethylene, polypropylene, styrene butadiene rubber, acrylated styrene butadiene rubber, epoxy resin, nylon, etc., but the present disclosure is not limited thereto.

### Conductive material

The positive active material layer may further include a conductive material. The conductive material may be used to provide conductivity to the electrode, and may include, e.g., a carbon-based material such as natural graphite, artificial graphite, carbon black, acetylene black, Ketjen black, carbon fiber, and carbon nanotubes; a metallic substance containing copper, nickel, aluminum, silver, etc. and in the form of metal powder or metal fiber; a conductive polymer such as polyphenylene derivative; or a combination thereof.

The conductive material may be included in an amount of 0.1 wt% to 5 wt%, or 0.1 wt% to 3 wt%, based on a total weight of each component of the positive electrode for an all-solid-state battery, or based on a total weight of the positive active material layer. Within the above content range, the conductive material may improve electrical conductivity without deteriorating battery performance.

If the positive active material layer further includes a conductive material, the positive active material layer may include 45 wt% to 99.25 wt% of the positive active material with respect to 100 wt% of the positive electrode active material layer, 0.5 wt% to 35 wt% of the sulfide-based solid electrolyte, 0.1 wt% to 10 wt% of a fluorine-based resin binder, 0.05 wt% to 5 wt% of vanadium oxide, and 0.1 wt% to 5 wt% of a conductive material.

Meanwhile, the positive electrode for a lithium rechargeable battery may further include an oxide-based inorganic solid electrolyte in addition to the solid electrolyte described above. The oxide-based inorganic solid electrolyte may include, e.g., Li₁₊ₓTi₂₋ₓAl(PO₄)₃(LTAP)(0≤x≤4), Li_{1+x+y}AlₓTi₂₋ₓSi_{y}P_{3-y}O₁₂(0<x<2, 0≤y<3), BaTiO₃, Pb(Zr,Ti)O₃(PZT), Pb₁₋ₓLaₓZr_{1-y}Ti_{y}O₃(PLZT)(0≤x<1, 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂(0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂ ceramics, garnet ceramics Li₃₊ₓLa₃M₂O₁₂ (M=Te, Nb, or Zr; x is an integer from 1 to 10), or a combination thereof.

### All-solid rechargeable battery

In an embodiment, an all-solid-state secondary battery is provided including the positive electrode and the negative electrode described above, and a solid electrolyte layer positioned between the positive electrode and the negative electrode. The all-solid rechargeable battery may be expressed as an all-solid-state battery or an all-solid-state lithium rechargeable battery.

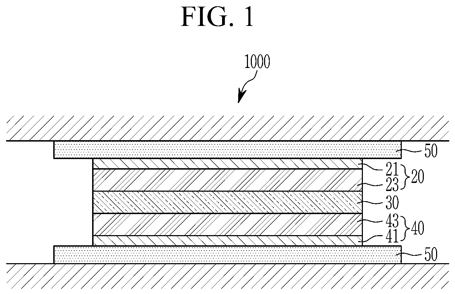

FIG. 1 illustrates a cross-sectional view of an all-solid rechargeable battery according to an embodiment. Referring to FIG. 1, the all-solid rechargeable battery 1000 may include a structure in which a negative electrode 40 including a negative current collector 41 and a negative active material layer 43, a solid electrolyte layer 30, and a positive electrode 20 including a positive active material layer 23 and a positive current collector 21 are stacked is stored in a case such as a pouch. The all-solid rechargeable battery 1000 may further include an elastic layer 50 outside at least one of the positive electrode 20 or the negative electrode 40. Although FIG. 1 shows one electrode assembly including the negative electrode 40, the solid electrolyte layer 30, and the positive electrode 20, an all-solid-state battery may also be manufactured by stacking two or more electrode assemblies.

### Negative electrode

For example, a negative electrode for an all-solid-state battery may include a current collector and a negative active material layer positioned on the current collector. The negative active material layer includes a negative active material, and may further include a binder, a conductive material, and/or a solid electrolyte.

The negative active material may include a material capable of reversibly intercalating/deintercalating lithium ions, lithium metal, an alloy of lithium metal, a material capable of doping and dedoping lithium, or a transition metal oxide.

The material capable of reversibly intercalating/deintercalating lithium ions may include a carbon-based negative active material, e.g., crystalline carbon, amorphous carbon, or a combination thereof. Examples of the crystalline carbon may include graphite such as amorphous, plate-shaped, flake-shaped, spherical or fibrous natural graphite or artificial graphite, and examples of the amorphous carbon may include soft carbon or hard carbon, mesophase pitch carbide, and calcined coke.

As the alloy of the lithium metal, an alloy of lithium with one or more metals selected from Na, K, Rb, Cs, Fr, Be, Mg, Ca, Sr, Si, Sb, Pb, In, Zn, Ba, Ra, Ge, Al and Sn may be used.

A Si-based negative electrode active material or a Sn-based negative electrode active material may be used as a material capable of doping and dedoping lithium, the Si-based negative active material may include silicon, silicon-carbon composite, SiOₓ (0<x<2), or an Si-Q alloy (The Q is an element selected from alkali metals, alkaline earth metals, Group 13 elements, Group 14 elements, Group 15 elements, Group 16 elements, transition metals, rare earth elements, and combinations thereof, but not Si), and the Sn-based negative electrode active material may include Sn, SnO₂, and an Sn-R alloy (The R is an element selected from the group consisting of alkali metals, alkaline earth metals, Group 13 elements, Group 14 elements, Group 15 elements, Group 16 elements, transition metals, rare earth elements, and combinations thereof, but not Sn), etc., and also at least one of these may be mixed with SiO₂. The element Q and the element R may each include at least one element selected from Mg, Ca, Sr, Ba, Ra, Sc, Y, Ti, Zr, Hf, Rf, V, Nb, Ta, Db, Cr, Mo, W, Sg, Pb, Pt, Cu, Ag, Au, Zn, Cd, B, Al, Ga, Sn, In, Tl, Ge, P, As, Sb, Bi, S, Se, Te, Po, and a combination thereof.

For example, the silicon-carbon composite may be a silicon-carbon composite including a core containing crystalline carbon and silicon particles and an amorphous carbon coating layer positioned on a surface of the core. The crystalline carbon may be artificial graphite, natural graphite, or a combination thereof. As a precursor of the amorphous carbon, coal-based pitch, mesophase pitch, petroleum-based pitch, coal-based oil, petroleum-based heavy oil, or polymer resin such as phenol resin, furan resin, and polyimide resin may be used. In this case, a content of silicon may be 10 wt% to 50 wt% based on a total weight of the silicon-carbon composite. In addition, a content of the crystalline carbon may be wt% to 70 wt% based on the total weight of the silicon-carbon composite, and a content of the amorphous carbon may be 20 wt% to 40 wt% based on the total weight of the silicon-carbon composite. Additionally, a thickness of the amorphous carbon coating layer may be 5 nm to 100 nm.

The average particle diameter (D50) of the silicon particles may be 10 nm to 20 µm, e.g., 10 nm to 500 nm. The silicon particles may exist in an oxidized form, and in this case, an atomic content ratio of Si:O in the silicon particles, which indicates a degree of oxidation, may be 99:1 to 33:67. The silicon particles may be particles of SiOₓ, and in this case, a range of x may be greater than 0 and less than 2 in SiOₓ. Herein, the average particle diameter (D50) is measured with a particle size analyzer using laser diffraction and indicates a diameter of particles with a cumulative volume of 50% by volume in the particle size distribution.

The Si-based negative active material or Sn-based negative active material may be used by mixing with a carbon-based negative active material. A mixing ratio of the Si-based negative active material or Sn-based negative active material; and the carbon-based negative active material may be in a weight ratio of 1:99 to 90:10.

A content of the negative active material in the negative active material layer may be 95 wt% to 99 wt% based on a total weight of the negative active material layer.

In an embodiment, the negative active material layer may further include a binder, and may further include a selectively conductive material. A content of the binder in the negative active material layer may be 1 wt% to 5 wt% based on a total weight of the negative active material layer. In addition, if a conductive material is further included, the negative active material layer may include 90 wt% to 98 wt% of the negative electrode active material, 1 wt% to 5 wt% of the binder, and 1 wt% to 5 wt% of the conductive material.

The binder serves to ensure that particles of the negative active material adhere to each other and also to adhere the negative active material to the current collector. The binder may include a non-water-soluble binder, a water-soluble binder, or a combination thereof.

The non-water-soluble binders may include, e.g., polyvinylchloride, carboxylated polyvinylchloride, polyvinylfluoride, polymers containing ethylene oxide, ethylene propylene copolymer, polystyrene, polyvinylpyrrolidone, polyurethane, polytetrafluoroethylene, polyvinylidene fluoride, polyethylene, polypropylene, polyamideimide, polyimide or a combination thereof.

Examples of the water-soluble binder may include a rubber binder or a polymer resin binder. The rubber-based binder may be selected from styrene-butadiene rubber, acrylated styrene-butadiene rubber, acrylonitrile-butadiene rubber, acryl rubber, butylrubber, fluorinerubber, and a combination thereof. The polymer resin binder may be selected from polyethyleneoxide, polyvinylpyrrolidone, polyphelohydrin, polyphosphazene, polyacrylonitrile, ethylenepropylenedienecopolymer, polyvinylpyridine, chlorosulfonated polyethylene, latex, polyesterresin, acrylresin, phenolresin, epoxy resin, polyvinylalcohol, and a combination thereof.

If a water-soluble binder is used as the negative binder, a thickener capable of imparting viscosity may be used together, and the thickener may include, e.g., a cellulose-based compound. The cellulose-based compound may include carboxymethyl cellulose, hydroxypropylmethyl cellulose, methyl cellulose, an alkali metal salt thereof, or a combination thereof. As the alkali metal, Na, K, or Li may be used. A content of the thickener may be 0.1 to 3 parts by weight based on 100 parts by weight of the negative active material.

The conductive material may be used to provide conductivity to the electrode, and may include, e.g., a carbon-based material such as natural graphite, artificial graphite, carbon black, acetylene black, Ketjen black, carbon fiber, and carbon nanotubes; a metallic substance including copper, nickel, aluminum, silver, etc. and in the form of metal powder or metal fiber; a conductive polymer such as polyphenylene derivative; or a mixture thereof.

The negative electrode current collector may be selected from copper foil, nickel foil, stainless steel foil, titanium foil, nickel foam, copper foam, a polymer substrate coated with a conductive metal, and a combination thereof.

As another example, the negative electrode for an all-solid-state battery may be a precipitation-type negative electrode. The precipitation-type negative electrode refers to a negative electrode that does not contain a negative active material if the battery is assembled, but lithium metal, etc. is deposited during battery charging and this acts as a negative active material.

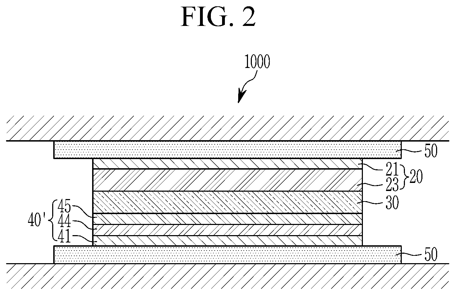

FIG. 2 illustrates a schematic cross-sectional view of an all-solid rechargeable battery including a precipitated negative electrode according to an embodiment. Referring to FIG. 2, a precipitated negative electrode 40' may include a current collector 41 and a negative electrode coating layer 45 disposed on the current collector. In an all-solid-state battery having such a precipitated negative electrode 40', initial charging begins in the absence of negative active material, and during charging, high-density lithium metal is precipitated between the current collector 41 and the negative electrode coating layer 45 to form a lithium metal layer 44, which may serve as a negative electrode active material. Accordingly, in an all-solid-state battery that has been charged at least once, the precipitated negative electrode 40' may include a current collector 41, a lithium metal layer 44 disposed on the current collector, and a negative electrode coating layer 45 positioned on the metal layer. The lithium metal layer 44 refers to a layer in which lithium metal, etc. is precipitated during the charging process of the battery, and may be referred to as a metal layer or a negative active material layer.

The negative electrode coating layer 45 may contain a metal, a carbon material, or a combination thereof that acts as a catalyst.

The metal may include, e.g., gold, platinum, palladium, silicon, silver, aluminum, bismuth, tin, zinc, or a combination thereof, and may be formed of one of these or of several types of alloys. If the metal exists in particle form, its average particle diameter (D50) may be about 4 µm or less, e.g., 10 nm to 4 µm.

The carbon material may be, e.g., crystalline carbon, amorphous carbon, or a combination thereof. The crystalline carbon may be, e.g., natural graphite, artificial graphite, mesophase carbon microbeads, or a combination thereof. The amorphous carbon may be, e.g., carbon black, activated carbon, acetylene black, denka black, Ketjen black, or a combination thereof.

If the negative electrode coating layer 45 includes both the metal and the carbon material, a mixing ratio of the metal and the carbon material may be, e.g., a weight ratio of 1:10 to 2:1. In this case, precipitation of lithium metal may be effectively promoted, and characteristics of the all-solid-state battery may be improved. For example, the negative electrode coating layer 45 may include a carbon material on which a catalyst metal is supported, or may include a mixture of metal particles and carbon material particles.

The negative electrode coating layer 45 may include the metal and amorphous carbon, for example, and in this case, precipitation of lithium metal can be effectively promoted.

The negative electrode coating layer 45 may further include a binder, and the binder may be a conductive binder. Additionally, the negative electrode coating layer 45 may further include general additives such as fillers, dispersants, and ion conductive materials.

A thickness of the negative electrode coating layer 45 may be, e.g., 100 nm to 20 µm, or 500 nm to 10 µm, or 1 µm to 5 µm.

For example, the precipitated negative electrode 40' may further include a thin film on a surface of the current collector, that is, between the current collector and the negative electrode coating layer. The thin film may contain an element that can form an alloy with lithium. The element that can form an alloy with lithium may be, e.g., gold, silver, zinc, tin, indium, silicon, aluminum, bismuth, etc., and may be formed of one type or several types of alloys. The thin film may further flatten the precipitation form of the lithium metal layer 44 and may further improve the characteristics of the all-solid-state battery. The thin film may be formed by, e.g., vacuum deposition, sputtering, or plating methods. A thickness of the thin film may be, e.g., 1 nm to 500 nm.

### Solid electrolyte layer

The solid electrolyte layer 30 may include a sulfide-based solid electrolyte, an oxide-based solid electrolyte, etc. Specific details of the sulfide-based solid electrolyte and the oxide-based solid electrolyte are as described above.

In an example, the solid electrolyte included in the positive electrode 20 and the solid electrolyte included in the solid electrolyte layer 30 may include a same compound or different compounds. For example, if both the positive electrode 20 and the solid electrolyte layer 30 contain an azyrodite-type sulfide-based solid electrolyte, overall performance of the all-solid rechargeable battery may be improved. In addition, as an example, if both the positive electrode 20 and the solid electrolyte layer 30 include the above-described coated solid electrolyte, the all-solid rechargeable battery may realize high capacity and high energy density while realizing excellent initial efficiency and lifespan characteristics.

Meanwhile, the average particle diameter (D50) of the solid electrolyte included in the positive electrode 20 may be smaller than the average particle diameter (D50) of the solid electrolyte included in the solid electrolyte layer 30. In this case, overall performance may be improved by maximizing energy density of the all-solid-state battery and increasing mobility of lithium ions. For example, the average particle diameter (D50) of the solid electrolyte contained in the positive electrode 20 may be 0.1 µm to 1.0 µm, or 0.1 µm to 0.8 µm, and the average particle diameter (D50) of the solid electrolyte included in the solid electrolyte layer 30 may be 1.5 µm to 5.0 µm, or 2.0 µm to 4.0 µm, or 2.5 µm to 3.5 µm. If this particle size range is satisfied, the energy density of the all-solid rechargeable battery may be maximized and the transfer of lithium ions may be facilitated, thereby suppressing resistance and thus improving the overall performance of the all-solid rechargeable battery. Herein, the average particle diameter (D50) of the solid electrolyte may be measured through a particle size analyzer using a laser diffraction method. Alternatively, the D50 may be calculated by selecting about 20 particles from a photomicroscope such as a scanning electron microscope, measuring the particle size, and obtaining the particle size distribution.

The solid electrolyte layer may further include a binder in addition to the solid electrolyte. In this case, the binder may be styrene butadiene rubber, polytetrafluoroethylene, polyvinylidene fluoride, polyethylene, acrylate polymer, or a combination thereof, but the present disclosure is not limited thereto, and anything used as a binder in the art may be used. The acrylate-based polymer may be, e.g., butyl acrylate, polyacrylate, polymethacrylate, or a combination thereof.

The solid electrolyte layer may be formed by adding a solid electrolyte to a binder solution, coating it on a base film, and drying it. A solvent for the binder solution may be isobutyryl isobutyrate, xylene, toluene, benzene, hexane, or a combination thereof. Since the solid electrolyte layer forming process is widely known in the field, detailed description will be omitted.

A thickness of the solid electrolyte layer may be, e.g., 10 µm to 150 µm.

The solid electrolyte layer may further include an alkali metal salt, and/or an ionic liquid, and/or a conductive polymer.

The alkali metal salt may be, e.g., a lithium salt. A content of the lithium salt in the solid electrolyte layer may be 1M or more, e.g., 1M to 4M. In this case, the lithium salt may improve ion conductivity by improving lithium ion mobility in the solid electrolyte layer.

The lithium salt may include, e.g., LiSCN, LiN(CN)₂, Li(CF₃SO₂)₃C, LiC₄F₉SO₃, LiN(SO₂CF₂CF₃)₂, LiCl, LiF, LiBr, LiI, LiB(C₂O₄)₂, LiBF₄, LiBF₃(C₂F₅), Lithium bis(oxalato) borate (LiBOB), lithium oxalyldifluoroborate (LIODFB), Lithium difluoro(oxalato)borate (LiDFOB), lithium bis(trifluoro methanesulfonyl)imide, LiTFSI, LiN(SO₂CF₃)₂), lithium bis(fluorosulfonyl)imide, LiFSI, LiN(SO₂F)₂), LiCF₃SO₃, LiAsF₆, LiSbF₆, LiClO₄ or a mixture thereof.

Additionally, the lithium salt may be an imide-based lithium salt, and for example, the imide-based lithium salt may include lithium bis(trifluoro methanesulfonyl)imide, LiTFSI, LiN(SO₂CF₃)₂ and lithium bis(fluorosulfonyl)imide, LiFSI, LiN(SO₂F)₂. The lithium salt may maintain or improve ionic conductivity by maintaining appropriate chemical reactivity with ionic liquid.

The ionic liquid has a melting point below room temperature, and refers to a salt that is in a liquid state at room temperature and consists of ions, or a room temperature molten salt.

The ionic liquid may be a compound containing a) one or more cations selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based,triazolium-based, and a mixture thereof and b) one or more anions selected from BF₄-, PF₆-, AsF₆-, SbF₆-, AlCl₄-, HSO₄-, ClO₄-, CH₃SO₃-, CF₃CO₂-, Cl-, Br-, I-, BF₄-, SO₄-, CF₃SO₃-, (FSO₂)₂N-, (C₂F₅SO₂)2N-, (C₂F₅SO₂)(CF₃SO₂)N-, and (CF₃SO₂)₂N-.

The ionic liquid may include, e.g., one or more selected from N-methyl-N-propylpyrrolidinium bis(trifluoromethanesulfonyl)imide, N-butyl-N-methylpyrrolidium bis(3-trifluoromethylsulfonyl)imide, 1-butyl-3-methylimidazolium bis(trifluoromethylsulfonyl)amide and 1-ethyl-3-methylimidazolium bis(trifluoromethylsulfonyl)amide.

A weight ratio of the solid electrolyte and the ionic liquid in the solid electrolyte layer may be 0.1:99.9 to 90:10, e.g., 10:90 to 90:10, 20:80 to 90:10, 30:70 to 90: 10, 40:60 to 90:10, or 50:50 to 90:10. A solid electrolyte layer that satisfies the above range may maintain or improve ionic conductivity by improving an electrochemical contact area with the electrode. Accordingly, energy density, discharge capacity, and a rate characteristic of the all-solid-state battery may be improved.

The all-solid-state battery may be a unit battery with a structure of positive electrode/solid electrolyte layer/negative electrode, a bicell including a structure of positive electrode/solid electrolyte layer/negative electrode/solid electrolyte layer/positive electrode, or a stacked battery in which the structure of the unit cell is repeated.

A shape of the all-solid-state battery is not particularly limited, and may be, e.g., coin-shaped, button-shaped, sheet-shaped, stacked-type, cylindrical-shaped, flat-shaped, etc. Additionally, the all-solid-state battery may also be applied to large batteries used in electric vehicles, etc. For example, the all-solid-state battery may also be used in hybrid vehicles such as plug-in hybrid electric vehicles (PHEV). In addition, it may be used in fields that require large amounts of power storage, e.g., electric bicycles or power tools.

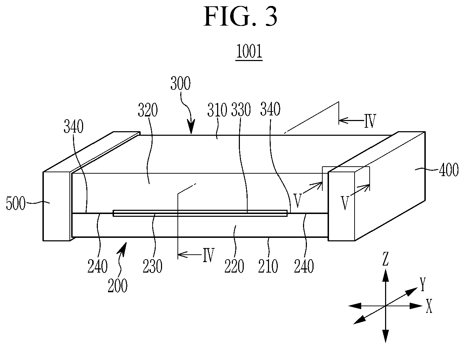

Hereinafter, an all-solid rechargeable battery according to an embodiment will be described with reference to FIG. 3 to FIG. 6.

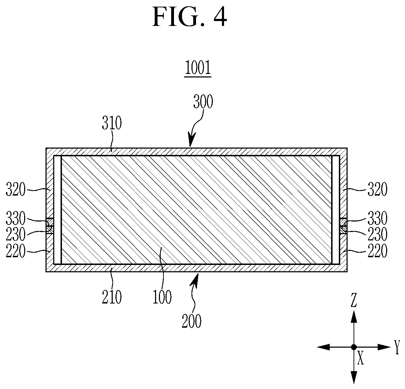

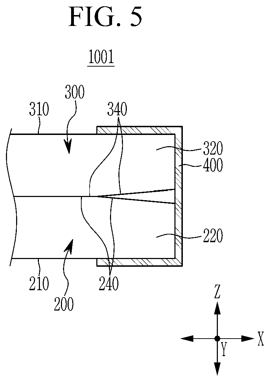

FIG. 3 illustrates a perspective view showing an all-solid rechargeable battery according to an embodiment. FIG. 4 illustrates a cross-sectional view taken along a line IV-IV of FIG. 3. FIG. 5 illustrates a cross-sectional view taken along a line V-V of FIG. 3. FIG. 5 illustrates a cross-sectional view showing a first non-welding surface of a first can and a second non-welding surface of a second can positioned inside the first cap.

Referring to FIG. 3 to FIG. 5, an all-solid rechargeable battery 1001 according to an embodiment minimizes interface resistance of the all-solid-state cell stack 100, and includes an all-solid-state cell stack 100, a first can 200, a second can 300, a first cap 400, and a second cap 500.

The all-solid-state cell stack 100 is a stack in which at least one all-solid-state cell, which is the all-solid-state battery described above, is stacked in a thickness direction. A stack structure of the all-solid-state cell stack 100 may include various known stack structures.

The first can 200 covers a lower portion of the all-solid-state cell stack 100. The first can 200 is combined with the second can 300, the first cap 400, and the second cap 500 to surround the all-solid-state cell stack 100, and pressurizes the all-solid-state cell stack 100 in a thickness direction. The first can 200 is welded to the second can 300 to press the all-solid-state cell stack 100 in a direction of the second can 300. The first can 200 may include various known metals such as stainless steel and aluminum.

The first can 200 includes a first plate portion 210, a first side wall portion 220, a first welding surface 230, and a first non-welding surface 240.

The first plate portion 210 covers a lower portion of the all-solid-state cell stack 100. The first plate portion 210 completely covers the lower portion of the all-solid-state cell stack 100, and each of opposite ends of the first plate portion 210 in a first direction X is inserted into each of the first cap 400 and the second cap 500.

The first side wall portion 220 is bent and extended from the first plate portion 210 to surround the all-solid-state cell stack 100. The first welding surface 230 and the first non-welding surface 240 are positioned on the first side wall portion 220. The first side wall portion 220 is bent and extended in the third direction Z from opposite ends of the first plate portion 210 in the second direction Y intersecting the first direction X to surround opposite sides of the all-solid-state cell stack 100 in the second direction Y. Herein, the third direction Z intersects the first direction X and the second direction Y. The first side wall portion 220 is welded to the second side wall portion 320 of the second can 300 by the first welding surface 230.

The first welding surface 230 extends along the first direction X in a central region of the first side wall portion 220. The first welding surface 230 is welded to the second welding surface 330 of the second can 300. The first welding surface 230 is welded to the second welding surface 330 of the second can 300 with the first can 200 and the second can 300 pressing the all-solid-state cell stack 100. The first welding surface 230 may be welded to the second welding surface 330 using a welding means such as a laser beam, but the present disclosure is not limited thereto, and may be welded to the second welding surface 330 using various known welding means. In a state where the first can 200 and the second can 300 pressurize the all-solid-state cell stack 100, the first welding surface 230 of the first can 200 is welded to the second welding surface 330 of the second can 300 so that the all-solid-state cell stack 100 is pressed while the first can 200 and the second can 300 are welded to each other.

The first non-welding surface 240 is adjacent to the first welding surface 230 and extends along the first direction X in an outer region of the first side wall portion 220. The first non-welding surface 240 is non-welded to the second can 300 and extends from the first welding surface 230 in the first direction X toward the first cap 400 to be inserted into the first cap 400. At least a portion of the first non-welding surface 240 may be inserted into the first cap 400, but the present disclosure is not limited thereto and the entire first non-welding surface 240 may be inserted into the first cap 400. The first non-welding surface 240 is non-welded to the second can 300 and extends from the first welding surface 230 in the first direction X toward the second cap 500 to be inserted into the second cap 500. At least a portion of the first non-welding surface 240 may be inserted into the second cap 500, but the present disclosure is not limited thereto and the entire first non-welding surface 240 may be inserted into the second cap 500. The first non-welding surface 240 extends at an angle along the first direction X away from the second can 300 from the first welding surface 230. At least a portion of the first non-welding surface 240 does not contact the second non-welding surface 340 of the second can 300. For example, referring to FIG. 5, the first non-welding surface 240 extends at an angle along the first direction X so as to move away from the first welding surface 230 and the second non-welding surface 340 of the second can 300 in the third direction Z so that the first non-welding surface 240 positioned at opposite ends of the first side wall portion 220 in the first direction X does not contact the second non-welding surface 340 of the second can 300.

The second can 300 covers an upper portion of the all-solid-state cell stack 100. The second can 300 is combined with the first can 200, the first cap 400, and the second cap 500 to surround the all-solid-state cell stack 100, and pressurizes the all-solid-state cell stack 100 in the third direction Z, which is the thickness direction. The second can 300 is welded to the first can 200 to press the all-solid-state cell stack 100 in the third direction Z, which is a direction of the first can 200. The second can 300 may include various known metals such as stainless steel and aluminum.

The second can 300 includes a second plate portion 310, a second side wall portion 320, a second welding surface 330, and a second non-welding surface 340.

The second plate portion 310 covers an upper portion of the all-solid-state cell stack 100. The second plate portion 310 completely covers the upper portion of the all-solid-state cell stack 100, and each of opposite ends of the second plate portion 310 in a first direction X is inserted into each of the first cap 400 and the second cap 500. The second plate portion 310, together with the first plate portion 210 of the first can 200, presses the all-solid-state cell stack 100 in the third direction Z.

The second side wall portion 320 is bent and extended from the second plate portion 310 to surround the all-solid-state cell stack 100. The second welding surface 330 and the second non-welding surface 340 are positioned on the second side wall portion 320. The second side wall portion 320 is bent and extended in the third direction Z from opposite ends of the second plate portion 310 in the second direction Y to surround opposite sides of the all-solid-state cell stack 100 in the second direction Y. The second side wall portion 320 is welded to the first side wall portion 220 of the first can 200 by the second welding surface 330.

The second welding surface 330 extends along the first direction X in a central region of the second side wall portion 320. The second welding surface 330 is welded to the first welding surface 230 of the first can 200. The second welding surface 330 is welded to the first welding surface 230 of the first can 200 with the second can 300 and the first can 200 pressing the all-solid-state cell stack 100 in the third direction Z. The second welding surface 330 may be welded to the first welding surface 230 using a welding means such as a laser beam, but the present disclosure is not limited thereto, and may be welded to the first welding surface 230 using various known welding means. In a state in which the second can 300 and the first can 200 press the all-solid-state cell stack 100 in the third direction Z, which is the thickness direction, the second welding surface 330 of the second can 300 is welded to the first welding surface 230 of the first can 200 so that the all-solid-state cell stack 100 is pressed in the third direction Z while the second can 300 and the first can 200 are welded to each other.

The second non-welding surface 340 is adjacent to the second welding surface 330 and extends along the first direction X in an outer region of the second side wall portion 320. The second non-welding surface 340 is non-welded to the first can 200 and extends from the second welding surface 330 in the first direction X toward the first cap 400 to be inserted into the first cap 400. At least a portion of the second non-welding surface 340 may be inserted into the first cap 400, but the present disclosure is not limited thereto and the entire second non-welding surface 340 may be inserted into the first cap 400. The second non-welding surface 340 is non-welded to the first can 200 and extends from the second welding surface 330 in the first direction X toward the second cap 500 to be inserted into the second cap 500. At least a portion of the second non-welding surface 340 may be inserted into the second cap 500, but the present disclosure is not limited thereto and the entire second non-welding surface 340 may be inserted into the second cap 500. The second non-welding surface 340 extends at an angle along the first direction X away from the first can 200 from the second welding surface 330. At least a portion of the second non-welding surface 340 does not contact the first non-welding surface 240 of the first can 200. For example, referring to FIG. 5, the second non-welding surface 340 extends at an angle along the first direction X so as to move away from the second welding surface 330 and the first non-welding surface 240 of the first can 200 in the third direction Z so that the second non-welding surface 340 positioned at opposite ends of the second side wall portion 320 in the first direction X does not contact the first non-welding surface 240 of the first can 200.

The first cap 400 covers a side portion of the all-solid-state cell stack 100, and the first can 200 and the second can 300 are inserted into the first cap 400. The first cap 400 covers a side portion of the all-solid-state cell stack 100 in the first direction X, and the first non-welding surface 240 of the first can 200 and the second non-welding surface 340 of the second can 300 are inserted. The inclined first non-welding surface 240 of the first can 200 and the inclined second non-welding surface 340 of the second can 300 are inserted into the first cap 400 so that the first non-welding surface 240 of the first can 200 moves in the direction of the second can 300 together with the first plate portion 210, and as the second non-welding surface 340 of the second can 300 moves in the direction of the first can 200 together with the second plate portion 310, the first can 200 and the second can 300 that press the all-solid-state cell stack 100 in the third direction Z, which is the thickness direction, by welding each other further pressurizes the all-solid-state cell stack 100 in the third direction Z, which is the thickness direction. The first cap 400 may be welded to the first can 200 and the second can 300, but the present disclosure is not limited thereto. The first cap 400 may include various known metals such as stainless steel and aluminum.

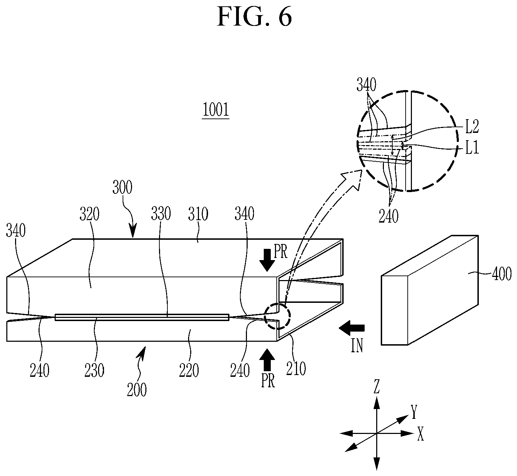

FIG. 6 illustrates a perspective view showing an example of coupling a first cap to side portions of a first can and a second can in an all-solid rechargeable battery according to an embodiment. FIG. 6 does not show the all-solid-state cell stack positioned inside the first can and the second can to clearly show a bonding structure, but when the first cap is coupled to one side of the first can and the second can, an all-solid-state cell stack is positioned inside the first can and the second can and is pressed by the first can and the second can.

For example, referring to FIG. 6, when coupling the first cap 400 to one side of the first can 200 and the second can 300 in the first direction X, the first non-welding surface 240 of the first can 200 and the second non-welding surface 340 of the second can 300 are pressed (PR) in the third direction Z, and are inserted (IN) into the first cap 400. In this case, a distance between the first non-welding surface 240 of the first can 200 and the second non-welding surface 340 of the second can 300 has a first length L1 when pressed (PR) in the third direction (Z), which is the pressing direction of the all-solid-state cell stack, and when the first non-welding surface 240 and the second non-welding surface 340 are inserted (IN) into the first cap 400, the first can 200 and the second can 300 have a second length L2 that is longer than the first length L1 due to a restoring force of each. Herein, the first length L1 and the second length L2 of the distance between the first non-welding surface 240 of the first can 200 and the second non-welding surface 340 of the second can 300 are smaller than the initial distance between the first non-welding surface 240 of the first can 200 and the second non-welding surface 340 of the second can 300. Accordingly, the first can 200 and the second can 300 that press the all-solid-state cell stack in the third direction (Z), which is the thickness direction, by welding each other further pressurize the all-solid-state cell stack in the third direction (Z), which is the thickness direction.

Meanwhile, in another embodiment, welding may be performed between the first welding surface 230 of the first can 200 and the second welding surface 330 of the second can 300 with the first can 200 and the second can 300 pressing the all-solid-state cell stack in the third direction Z by inserting the first non-welding surface 240 into the first cap 400 and the second cap 500 positioned at opposite sides of the first can 200 and the second can 300 in the first direction X.

Referring to FIG. 3, the second cap 500 covers the other side portion of the all-solid-state cell stack 100, and the first can 200 and the second can 300 are inserted into the second cap 500. The second cap 500 covers the other side portion of the all-solid-state cell stack 100 in the first direction X, and the first non-welding surface 240 of the first can 200 and the second non-welding surface 340 of the second can 300 are inserted. The inclined first non-welding surface 240 of the first can 200 and the inclined second non-welding surface 340 of the second can 300 are inserted into the second cap 500 so that the first non-welding surface 240 of the first can 200 moves in the direction of the second can 300 together with the first plate portion 210, and as the second non-welding surface 340 of the second can 300 moves in the direction of the first can 200 together with the second plate portion 310, the first can 200 and the second can 300 that press the all-solid-state cell stack 100 in the third direction Z, which is the thickness direction, by welding each other further pressurizes the all-solid-state cell stack 100 in the third direction Z, which is the thickness direction. The second cap 500 may be welded to the first can 200 and the second can 300, but the present disclosure is not limited thereto. The second cap 500 may include various known metals such as stainless steel and aluminum.

In this way, in an all-solid rechargeable battery 1001 according to an embodiment, the all-solid-state cell stack 100 is pressed in the third direction Z with the first can 200 and the second can 300 welded to each other by welding the first welding surface 230 of the first can 200 with the second welding surface 330 of the second can 300 in a state in which the first can 200 and the second can 300 press the all-solid-state cell stack 100 in the third direction Z, which is the thickness direction, and thus even if the all-solid-state cell stack 100 is surrounded by the first can 200 and the second can 300, which have elastic restoring force due to their own strength, interface resistance of the all-solid-state cell stack 100 is minimized.

In addition, in the all-solid rechargeable battery 1001 according to an embodiment, the first non-welding surface 240 and the second non-welding surface 340 of the first can 200 and the second can 300 pressing the all-solid-state cell stack 100 in the third direction Z, which is the thickness direction, by welding each other are respectively inserted into the first cap 400 and the second cap 500 so that the first can 200 and the second can 300 further pressurize the all-solid-state cell stack 100 in the third direction Z, which is the thickness direction, and thus even if the all-solid-state cell stack 100 is surrounded by the first can 200 and the second can 300, which have elastic restoring force due to their own strength, the interface resistance of the all-solid-state cell stack 100 is minimized.

That is, even if the all-solid-state cell stack is wrapped by a can, the all-solid rechargeable battery 1001 with minimized interfacial resistance is provided.

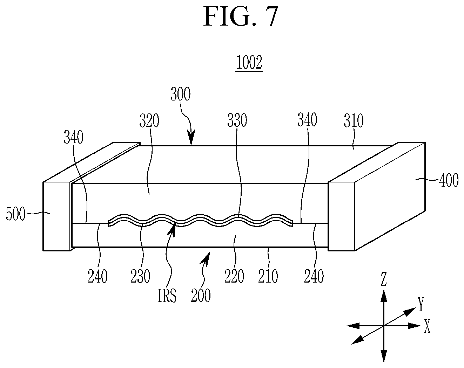

Hereinafter, an all-solid rechargeable battery according to another embodiment will be described with reference to FIG. 7. Hereinafter, parts that are different from the all-solid rechargeable battery according to the above-described embodiment will be described.

FIG. 7 illustrates a perspective view showing an all-solid rechargeable battery according to another embodiment.

Referring to FIG. 7, an all-solid rechargeable battery 1002 according to another embodiment minimizes interface resistance of the all-solid-state cell stack, and includes an all-solid-state cell stack, a first can 200, a second can 300, a first cap 400, and a second cap 500.

The first can 200 includes a first plate portion 210, a first side wall portion 220, a first welding surface 230, and a first non-welding surface 240.

The first welding surface 230 extends along the first direction X in a central region of the first side wall portion 220. The first welding surface 230 is welded to the second welding surface 330 of the second can 300. The first welding surface 230 is welded to the second welding surface 330 of the second can 300 with the first can 200 and the second can 300 pressing the all-solid-state cell stack. The first welding surface 230 may be welded to the second welding surface 330 using a welding means such as a laser beam, but the present disclosure is not limited thereto, and may be welded to the second welding surface 330 using various known welding means. In a state where the first can 200 and the second can 300 pressurize the all-solid-state cell stack, the first welding surface 230 of the first can 200 is welded to the second welding surface 330 of the second can 300 so that the all-solid-state cell stack is pressed in the third direction Z, which is the thickness direction while the first can 200 and the second can 300 are welded to each other.

The first welding surface 230 includes an uneven structure IRS extending in the first direction X, which is a direction of the first non-welding surface 240. An interface between the first welding surface 230 and the second welding surface 330 includes the uneven structure IRS extending in the first direction X, which is a direction of the first cap 400 and the second cap 500. The uneven structure IRS of the first welding surface 230 includes a convex surface.

The second can 300 includes a second plate portion 310, a second side wall portion 320, a second welding surface 330, and a second non-welding surface 340.

The second welding surface 330 extends along the first direction X in a central region of the second side wall portion 320. The second welding surface 330 is welded to the first welding surface 230 of the first can 200. The second welding surface 330 is welded to the first welding surface 230 of the first can 200 with the second can 300 and the first can 200 pressing the all-solid-state cell stack in the third direction Z. The second welding surface 330 may be welded to the first welding surface 230 using a welding means such as a laser beam, but the present disclosure is not limited thereto, and may be welded to the first welding surface 230 using various known welding means. In a state in which the second can 300 and the first can 200 press the all-solid-state cell stack in the third direction Z, which is the thickness direction, the second welding surface 330 of the second can 300 is welded to the first welding surface 230 of the first can 200 so that the all-solid-state cell stack is pressed in the third direction Z while the second can 300 and the first can 200 are welded to each other.

The second welding surface 330 includes the uneven structure IRS extending in the first direction X, which is a direction of the second non-welding surface 340. An interface between the second welding surface 330 and the first welding surface 230 includes the uneven structure IRS extending in the first direction X, which is a direction of the first cap 400 and the second cap 500. The uneven structure IRS of the second welding surface 330 includes a convex surface.

In this way, in an all-solid rechargeable battery 1002 according to another embodiment, an interface between the first welding surface 230 and the second welding surface 330 includes the uneven structure IRS so that a surface area of the interface between the first welding surface 230 and the second welding surface 330 increases so that the all-solid-state cell stack is firmly pressed in the third direction Z with the first can 200 and the second can 300 welded to each other, and thus even if the all-solid-state cell stack is surrounded by the first can 200 and the second can 300, which have elastic restoring force due to their own strength, interface resistance of the all-solid-state cell stack is minimized.

In addition, in the all-solid rechargeable battery 1002 according to another embodiment, the first non-welding surface 240 and the second non-welding surface 340 of the first can 200 and the second can 300 firmly pressing the all-solid-state cell stack in the third direction Z, which is the thickness direction, by welding each other are respectively inserted into the first cap 400 and the second cap 500 so that the first can 200 and the second can 300 further pressurize the all-solid-state cell stack in the third direction Z, which is the thickness direction, and thus even if the all-solid-state cell stack is surrounded by the first can 200 and the second can 300, which have elastic restoring force due to their own strength, the interface resistance of the all-solid-state cell stack is minimized.

That is, even if the all-solid-state cell stack is wrapped by a can, the all-solid rechargeable battery 1002 with minimized interfacial resistance is provided.

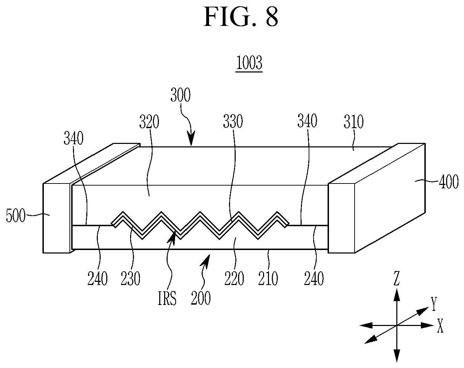

Hereinafter, a button cell according to another embodiment will be described with reference to FIG. 8. Hereinafter, parts that are different from the all-solid rechargeable battery according to the above-described embodiment will be described.

FIG. 8 illustrates a perspective view showing an all-solid rechargeable battery according to another embodiment.

Referring to FIG. 8, an all-solid rechargeable battery 1003 according to another embodiment minimizes interface resistance of the all-solid-state cell stack, and includes an all-solid-state cell stack, a first can 200, a second can 300, a first cap 400, and a second cap 500.

The first can 200 includes a first plate portion 210, a first side wall portion 220, a first welding surface 230, and a first non-welding surface 240.

The first welding surface 230 extends along the first direction X in a central region of the first side wall portion 220. The first welding surface 230 is welded to the second welding surface 330 of the second can 300. The first welding surface 230 is welded to the second welding surface 330 of the second can 300 with the first can 200 and the second can 300 pressing the all-solid-state cell stack. The first welding surface 230 may be welded to the second welding surface 330 using a welding means such as a laser beam, but the present disclosure is not limited thereto, and may be welded to the second welding surface 330 using various known welding means. In a state where the first can 200 and the second can 300 pressurize the all-solid-state cell stack, the first welding surface 230 of the first can 200 is welded to the second welding surface 330 of the second can 300 so that the all-solid-state cell stack is pressed in the third direction Z, which is the thickness direction while the first can 200 and the second can 300 are welded to each other.

The first welding surface 230 includes an uneven structure IRS extending in the first direction X, which is a direction of the first non-welding surface 240. An interface between the first welding surface 230 and the second welding surface 330 includes the uneven structure IRS extending in the first direction X, which is a direction of the first cap 400 and the second cap 500. The uneven structure IRS of the first welding surface 230 includes a triangular surface.

The second can 300 includes a second plate portion 310, a second side wall portion 320, a second welding surface 330, and a second non-welding surface 340.

The second welding surface 330 extends along the first direction X in a central region of the second side wall portion 320. The second welding surface 330 is welded to the first welding surface 230 of the first can 200. The second welding surface 330 is welded to the first welding surface 230 of the first can 200 with the second can 300 and the first can 200 pressing the all-solid-state cell stack in the third direction Z. The second welding surface 330 may be welded to the first welding surface 230 using a welding means such as a laser beam, but the present disclosure is not limited thereto, and may be welded to the first welding surface 230 using various known welding means. In a state in which the second can 300 and the first can 200 press the all-solid-state cell stack in the third direction Z, which is the thickness direction, the second welding surface 330 of the second can 300 is welded to the first welding surface 230 of the first can 200 so that the all-solid-state cell stack is pressed in the third direction Z while the second can 300 and the first can 200 are welded to each other.

The second welding surface 330 includes the uneven structure IRS extending in the first direction X, which is a direction of the second non-welding surface 340. An interface between the second welding surface 330 and the first welding surface 230 includes the uneven structure IRS extending in the first direction X, which is a direction of the first cap 400 and the second cap 500. The uneven structure IRS of the second welding surface 330 includes a triangular surface.

Meanwhile, in another embodiment, the uneven structure IRS of the first welding surface 230 and the second welding surface 330 includes various known uneven structures such as circular, oval, quadrangular, pentagonal, polygonal, and irregular shapes.

In this way, in an all-solid rechargeable battery 1003 according to another embodiment, an interface between the first welding surface 230 and the second welding surface 330 includes the uneven structure IRS, so that a surface area of the interface between the first welding surface 230 and the second welding surface 330 increases so that the all-solid-state cell stack is firmly pressed in the third direction Z with the first can 200 and the second can 300 welded to each other, and thus even if the all-solid-state cell stack is surrounded by the first can 200 and the second can 300, which have elastic restoring force due to their own strength, interface resistance of the all-solid-state cell stack is minimized.

In addition, in the all-solid rechargeable battery 1003 according to another embodiment, the first non-welding surface 240 and the second non-welding surface 340 of the first can 200 and the second can 300 firmly pressing the all-solid-state cell stack in the third direction Z, which is the thickness direction, by welding each other are respectively inserted into the first cap 400 and the second cap 500 so that the first can 200 and the second can 300 further pressurize the all-solid-state cell stack in the third direction Z, which is the thickness direction, and thus even if the all-solid-state cell stack is surrounded by the first can 200 and the second can 300, which have elastic restoring force due to their own strength, the interface resistance of the all-solid-state cell stack is minimized.

That is, even if the all-solid-state cell stack is wrapped by a can, the all-solid rechargeable battery 1003 with minimized interfacial resistance is provided.

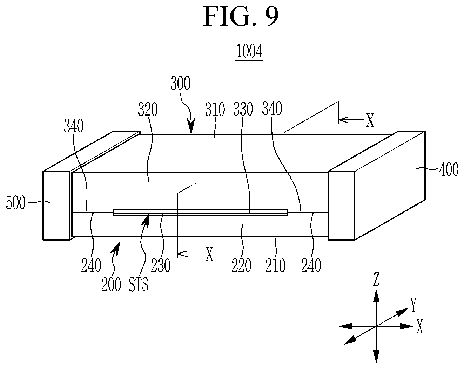

Hereinafter, an all-solid rechargeable battery according to another embodiment will be described with reference to FIG. 9 to FIG. 11. Hereinafter, parts that are different from the all-solid rechargeable battery according to the above-described embodiment will be described.

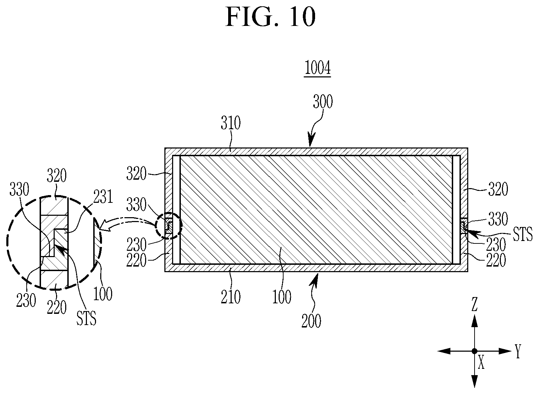

FIG. 9 illustrates a perspective view showing an all-solid rechargeable battery according to another embodiment. FIG. 10 illustrates a cross-sectional view taken along a line X-X of FIG. 9.

Referring to FIG. 9 and FIG. 10, an all-solid rechargeable battery 1004 according to another embodiment minimizes interface resistance of the all-solid-state cell stack 100, and includes an all-solid-state cell stack 100, a first can 200, a second can 300, a first cap 400, and a second cap 500.

The first can 200 includes a first plate portion 210, a first side wall portion 220, a first welding surface 230, and a first non-welding surface 240.

The first welding surface 230 extends along the first direction X in a central region of the first side wall portion 220. The first welding surface 230 is welded to the second welding surface 330 of the second can 300. The first welding surface 230 is welded to the second welding surface 330 of the second can 300 with the first can 200 and the second can 300 pressing the all-solid-state cell stack 100. The first welding surface 230 may be welded to the second welding surface 330 using a welding means such as a laser beam, but the present disclosure is not limited thereto, and may be welded to the second welding surface 330 using various known welding means. In a state where the first can 200 and the second can 300 pressurize the all-solid-state cell stack 100, the first welding surface 230 of the first can 200 is welded to the second welding surface 330 of the second can 300 so that the all-solid-state cell stack 100 is pressed in the third direction Z, which is the thickness direction while the first can 200 and the second can 300 are welded to each other.

The first welding surface 230 includes a step structure STS recessed in the third direction Z from a direction of the second can 300. The step structure STS of the first welding surface 230 protrudes in the third direction Z to form a first blocking wall 231 positioned between the second can 300 and the all-solid-state cell stack 100.

The second can 300 includes a second plate portion 310, a second side wall portion 320, a second welding surface 330, and a second non-welding surface 340.

The second welding surface 330 extends along the first direction X in a central region of the second side wall portion 320. The second welding surface 330 is welded to the first welding surface 230 of the first can 200. The second welding surface 330 is welded to the first welding surface 230 of the first can 200 with the second can 300 and the first can 200 pressing the all-solid-state cell stack 100 in the third direction Z. The second welding surface 330 may be welded to the first welding surface 230 using a welding means such as a laser beam, but the present disclosure is not limited thereto, and may be welded to the first welding surface 230 using various known welding means. In a state in which the second can 300 and the first can 200 press the all-solid-state cell stack 100 in the third direction Z, which is the thickness direction, the second welding surface 330 of the second can 300 is welded to the first welding surface 230 of the first can 200 so that the all-solid-state cell stack 100 is pressed in the third direction Z while the second can 300 and the first can 200 are welded to each other.

The second welding surface 330 includes a step structure corresponding to the first welding surface 230 including a step structure STS.

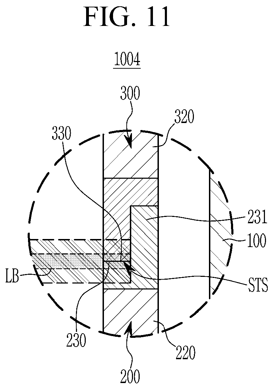

FIG. 11 illustrates a partial cross-sectional view showing welding using a laser beam between3 first and second welding surfaces of an all-solid rechargeable battery according to another embodiment shown in FIG. 10.

Referring to FIG. 11, if welding between the first welding surface 230 of the first can 200 and the second welding surface 330 of the second can 300 using a laser beam LB, the first blocking wall 231 included in the step structure STS of the first welding surface 230 protrudes in the third direction Z to be positioned between the second can 300 and the all-solid-state cell stack 100 so that the laser beam LB is blocked from passing through the all-solid-state cell stack 100 by the first blocking wall 231, and thus damage of the all-solid-state cell stack 100 by welding between the first can 200 and the second can 300 is suppressed.

As such, the all-solid rechargeable battery 1004 according to another embodiment includes a step structure STS in which the first welding surface 230 includes the first blocking wall 231 so that the laser beam LB for welding between the first welding surface 230 and the second welding surface 330 is blocked from passing through the all-solid cell laminate 100 by the first blocking wall 231, and thus damage of the all-solid-state cell stack 100 by welding between the first can 200 and the second can 300 is suppressed.

In addition, in the all-solid rechargeable battery 1004 according to another embodiment, the all-solid-state cell stack 100 is pressed in the third direction Z with the first can 200 and the second can 300 welded to each other by welding the first welding surface 230 of the first can 200 with the second welding surface 330 of the second can 300 in a state in which the first can 200 and the second can 300 press the all-solid-state cell stack 100 in the third direction Z, which is the thickness direction, and thus even if the all-solid-state cell stack 100 is surrounded by the first can 200 and the second can 300, which have elastic restoring force due to their own strength, interface resistance of the all-solid-state cell stack 100 is minimized.

In addition, in the all-solid rechargeable battery 1004 according to another embodiment, the first non-welding surface 240 and the second non-welding surface 340 of the first can 200 and the second can 300 pressing the all-solid-state cell stack 100 in the third direction Z, which is the thickness direction, by welding each other are respectively inserted into the first cap 400 and the second cap 500 so that the first can 200 and the second can 300 further pressurize the all-solid-state cell stack 100 in the third direction Z, which is the thickness direction, and thus even if the all-solid-state cell stack 100 is surrounded by the first can 200 and the second can 300, which have elastic restoring force due to their own strength, the interface resistance of the all-solid-state cell stack 100 is minimized.

That is, even if the all-solid-state cell stack is wrapped by a can, damage to the all-solid-state cell stack due to can welding is suppressed, and the all-solid rechargeable battery 1004 with minimized interfacial resistance is provided.

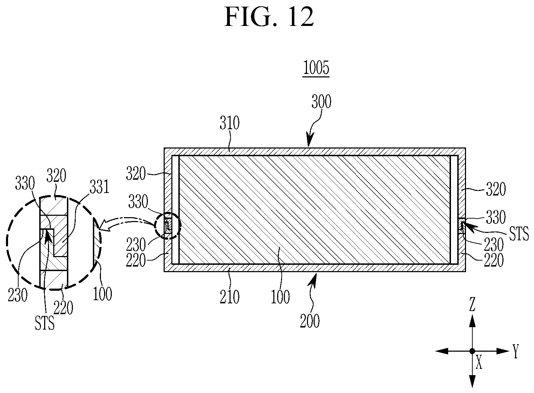

Hereinafter, a button cell according to another embodiment will be described with reference to FIG. 12. Hereinafter, parts that are different from the all-solid rechargeable battery according to the above-described embodiment will be described.

FIG. 12 illustrates a cross-sectional view showing an all-solid rechargeable battery according to another embodiment.

Referring to FIG. 12, an all-solid rechargeable battery 1005 according to another embodiment minimizes interface resistance of the all-solid-state cell stack 100, and includes an all-solid-state cell stack 100, a first can 200, a second can 300, a first cap, and a second cap.

The first can 200 includes a first plate portion 210, a first side wall portion 220, a first welding surface 230, and a first non-welding surface.

The first welding surface 230 includes a step structure corresponding to the second welding surface 330 including a step structure STS.

The second can 300 includes a second plate portion 310, a second side wall portion 320, a second welding surface 330, and a second non-welding surface 340.

The second welding surface 330 includes a step structure STS recessed in the third direction Z from a direction of the first can 200. The step structure STS of the second welding surface 330 protrudes in the third direction Z to form a second blocking wall 331 positioned between the first can 200 and the all-solid-state cell stack 100.

If welding between the first welding surface 230 of the first can 200 and the second welding surface 330 of the second can 300 using a laser beam, the second blocking wall 331 included in the step structure STS of the second welding surface 330 protrudes in the third direction Z to be positioned between the first can 200 and the all-solid-state cell stack 100 so that the laser beam is blocked from passing through the all-solid-state cell stack 100 by the second blocking wall 331, and thus damage of the all-solid-state cell stack 100 by welding between the first can 200 and the second can 300 is suppressed.

As such, the all-solid rechargeable battery 1005 according to another embodiment includes a step structure STS in which the second welding surface 330 includes the second blocking wall 331 so that the laser beam for welding between the first welding surface 230 and the second welding surface 330 is blocked from passing through the all-solid cell laminate 100 by the second blocking wall 331, and thus damage of the all-solid-state cell stack 100 by welding between the first can 200 and the second can 300 is suppressed.

That is, even if the all-solid-state cell stack is wrapped by a can, damage to the all-solid-state cell stack due to can welding is suppressed, and the all-solid rechargeable battery 1005 with minimized interfacial resistance is provided.

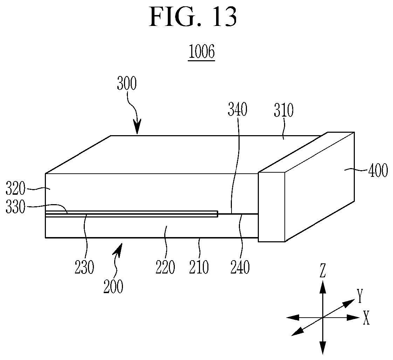

Hereinafter, a button cell according to another embodiment will be described with reference to FIG. 13. Hereinafter, parts that are different from the all-solid rechargeable battery according to the above-described embodiment will be described.

FIG. 13 illustrates a perspective view showing an all-solid rechargeable battery according to another embodiment.

Referring to FIG. 13, an all-solid rechargeable battery 1006 according to another embodiment minimizes interface resistance of the all-solid-state cell stack, and includes an all-solid-state cell stack, a first can 200, a second can 300, and a first cap 400.

The first can 200 covers a lower portion of the all-solid-state cell stack. The first can 200 is combined with the second can 300 and the first cap 400 to surround the all-solid-state cell stack, and pressurizes the all-solid-state cell stack in a thickness direction. The first can 200 is welded to the second can 300 to press the all-solid-state cell stack in a direction of the second can 300. The first can 200 may include various known metals such as stainless steel and aluminum.

The first can 200 includes a first plate portion 210, a first side wall portion 220, a first welding surface 230, and a first non-welding surface 240.

The first plate portion 210 covers a lower portion of the all-solid-state cell stack. The first plate portion 210 completely covers the lower portion of the all-solid-state cell stack, and one end portion of the first plate 210 in the first direction X is inserted into the first cap 400.

The first side wall portion 220 is bent and extended from the first plate portion 210 to surround the all-solid-state cell stack. The first welding surface 230 and the first non-welding surface 240 are positioned on the first side wall portion 220. The first side wall portion 220 is bent and extended in the third direction Z from opposite ends of the first plate portion 210 in the second direction Y intersecting the first direction X to surround opposite sides of the all-solid-state cell stack in the second direction Y. Herein, the third direction Z intersects the first direction X and the second direction Y. The first side wall portion 220 is welded to the second side wall portion 320 of the second can 300 by the first welding surface 230.

The first welding surface 230 extends along the first direction X in a central region of the first side wall portion 220. The first welding surface 230 is welded to the second welding surface 330 of the second can 300. The first welding surface 230 is welded to the second welding surface 330 of the second can 300 with the first can 200 and the second can 300 pressing the all-solid-state cell stack. The first welding surface 230 may be welded to the second welding surface 330 using a welding means such as a laser beam, but the present disclosure is not limited thereto, and may be welded to the second welding surface 330 using various known welding means. In a state where the first can 200 and the second can 300 pressurize the all-solid-state cell stack, the first welding surface 230 of the first can 200 is welded to the second welding surface 330 of the second can 300 so that the all-solid-state cell stack is pressed while the first can 200 and the second can 300 are welded to each other.

The first non-welding surface 240 is adjacent to the first welding surface 230 and extends along the first direction X in an outer region of the first side wall portion 220. The first non-welding surface 240 is non-welded to the second can 300 and extends from the first welding surface 230 in the first direction X toward the first cap 400 to be inserted into the first cap 400. At least a portion of the first non-welding surface 240 may be inserted into the first cap 400, but the present disclosure is not limited thereto and the entire first non-welding surface 240 may be inserted into the first cap 400. The first non-welding surface 240 extends at an angle along the first direction X away from the second can 300 from the first welding surface 230. At least a portion of the first non-welding surface 240 does not contact the second non-welding surface 340 of the second can 300.

The second can 300 covers an upper portion of the all-solid-state cell stack. The second can 300 is combined with the first can 200 and the first cap 400 to surround the all-solid-state cell stack, and pressurizes the all-solid-state cell stack in the third direction Z, which is the thickness direction. The second can 300 is welded to the first can 200 to press the all-solid-state cell stack in the third direction Z, which is a direction of the first can 200. The second can 300 may include various known metals such as stainless steel and aluminum.

The second can 300 includes a second plate portion 310, a second side wall portion 320, a second welding surface 330, and a second non-welding surface 340.

The second plate portion 310 covers an upper portion of the all-solid-state cell stack. The second plate portion 310 completely covers the upper portion of the all-solid-state cell stack, and one end portion of the second plate 310 in the first direction X is inserted into the first cap 400. The second plate portion 310, together with the first plate portion 210 of the first can 200, presses the all-solid-state cell stack in the third direction Z.

The second side wall portion 320 is bent and extended from the second plate portion 310 to surround the all-solid-state cell stack. The second welding surface 330 and the second non-welding surface 340 are positioned on the second side wall portion 320. The second side wall portion 320 is bent and extended in the third direction Z from opposite ends of the second plate portion 310 in the second direction Y to surround opposite sides of the all-solid-state cell stack in the second direction Y. The second side wall portion 320 is welded to the first side wall portion 220 of the first can 200 by the second welding surface 330.

The second welding surface 330 extends along the first direction X in a central region of the second side wall portion 320. The second welding surface 330 is welded to the first welding surface 230 of the first can 200. The second welding surface 330 is welded to the first welding surface 230 of the first can 200 with the second can 300 and the first can 200 pressing the all-solid-state cell stack in the third direction Z. The second welding surface 330 may be welded to the first welding surface 230 using a welding means such as a laser beam, but the present disclosure is not limited thereto, and may be welded to the first welding surface 230 using various known welding means. In a state in which the second can 300 and the first can 200 press the all-solid-state cell stack in the third direction Z, which is the thickness direction, the second welding surface 330 of the second can 300 is welded to the first welding surface 230 of the first can 200 so that the all-solid-state cell stack is pressed in the third direction Z while the second can 300 and the first can 200 are welded to each other.

The second non-welding surface 340 is adjacent to the second welding surface 330 and extends along the first direction X in an outer region of the second side wall portion 320. The second non-welding surface 340 is non-welded to the first can 200 and extends from the second welding surface 330 in the first direction X toward the first cap 400 to be inserted into the first cap 400. At least a portion of the second non-welding surface 340 may be inserted into the first cap 400, but the present disclosure is not limited thereto and the entire second non-welding surface 340 may be inserted into the first cap 400. The second non-welding surface 340 extends at an angle along the first direction X away from the first can 200 from the second welding surface 330. At least a portion of the second non-welding surface 340 does not contact the first non-welding surface 240 of the first can 200.

The first cap 400 covers a side portion of the all-solid-state cell stack, and the first can 200 and the second can 300 are inserted into the first cap 400. The first cap 400 covers a side portion of the all-solid-state cell stack in the first direction X, and the first non-welding surface 240 of the first can 200 and the second non-welding surface 340 of the second can 300 are inserted. The inclined first non-welding surface 240 of the first can 200 and the inclined second non-welding surface 340 of the second can 300 are inserted into the first cap 400 so that the first non-welding surface 240 of the first can 200 moves in the direction of the second can 300 together with the first plate portion 210, and as the second non-welding surface 340 of the second can 300 moves in the direction of the first can 200 together with the second plate portion 310, the first can 200 and the second can 300 that press the all-solid-state cell stack in the third direction Z, which is the thickness direction, by welding each other further pressurizes the all-solid-state cell stack in the third direction Z, which is the thickness direction. The first cap 400 may be welded to the first can 200 and the second can 300, but the present disclosure is not limited thereto. The first cap 400 may include various known metals such as stainless steel and aluminum.

In this way, in the all-solid rechargeable battery 1006 according to another embodiment, the all-solid-state cell stack is pressed in the third direction Z with the first can 200 and the second can 300 welded to each other by welding the first welding surface 230 of the first can 200 with the second welding surface 330 of the second can 300 in a state in which the first can 200 and the second can 300 press the all-solid-state cell stack in the third direction Z, which is the thickness direction, and thus even if the all-solid-state cell stack 100 is surrounded by the first can 200 and the second can 300, which have elastic restoring force due to their own strength, interface resistance of the all-solid-state cell stack 100 is minimized.

In addition, in the all-solid rechargeable battery 1006 according to another embodiment, the first non-welding surface 240 and the second non-welding surf0.ace 340 of the first can 200 and the second can 300 pressing the all-solid-state cell stack in the third direction Z, which is the thickness direction, by welding each other are inserted into the first cap 400 so that the first can 200 and the second can 300 further pressurize the all-solid-state cell stack in the third direction Z, which is the thickness direction, and thus even if the all-solid-state cell stack is surrounded by the first can 200 and the second can 300, which have elastic restoring force due to their own strength, the interface resistance of the all-solid-state cell stack is minimized.

That is, even if the all-solid-state cell stack is wrapped by a can, the all-solid rechargeable battery 1006 with minimized interfacial resistance is provided.

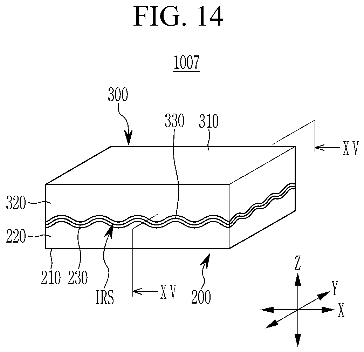

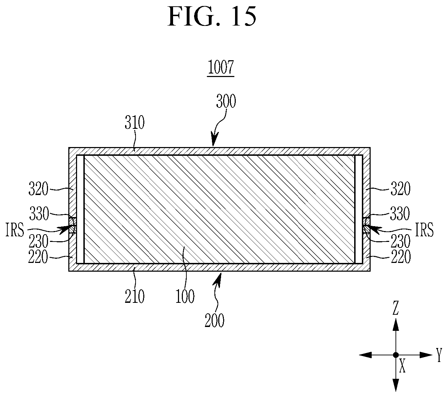

Hereinafter, an all-solid rechargeable battery according to another embodiment will be described with reference to FIG. 14 and FIG. 15. Hereinafter, parts that are different from the all-solid rechargeable battery according to the above-described embodiment will be described.

FIG. 14 illustrates a perspective view showing an all-solid rechargeable battery according to another embodiment. FIG. 15 illustrates a cross-sectional view taken along a line XV-XV of FIG. 14.

Referring to FIG. 14 and FIG. 15, an all-solid rechargeable battery 1007 according to another embodiment minimizes interface resistance of the all-solid-state cell stack 100, and includes an all-solid-state cell stack 100, a first can 200, and a second can 300.

The first can 200 covers a lower portion of the all-solid-state cell stack 100. The first can 200 is combined with the second can 300 to surround the all-solid-state cell stack 100, and pressurizes the all-solid-state cell stack 100 in the third direction Z, which is the thickness direction. The first can 200 is welded to the second can 300 to press the all-solid-state cell stack 100 in a direction of the second can 300. The first can 200 may include various known metals such as stainless steel and aluminum.

The first can 200 includes a first plate portion 210, a first side wall portion 220, and a first welding surface 230.

The first plate portion 210 covers a lower portion of the all-solid-state cell stack 100. The first plate portion 210 completely covers a lower portion of the all-solid-state cell stack 100.

The first side wall portion 220 is bent and extended from the first plate portion 210 to surround the all-solid-state cell stack 100. The first welding surface 230 is positioned on the first side wall portion 220. The first side wall portion 220 is bent and extended in the third direction Z from an edge of the first plate portion 210 and surrounds a side portion of the all-solid cell stack 100. The first side wall portion 220 is welded to the second side wall portion 320 of the second can 300 by the first welding surface 230.

The first welding surface 230 extends along the first side wall portion 220. The first welding surface 230 is welded to the second welding surface 330 of the second can 300. The first welding surface 230 is welded to the second welding surface 330 of the second can 300 with the first can 200 and the second can 300 pressing the all-solid-state cell stack 100. The first welding surface 230 may be welded to the second welding surface 330 using a welding means such as a laser beam, but the present disclosure is not limited thereto, and may be welded to the second welding surface 330 using various known welding means. In a state where the first can 200 and the second can 300 pressurize the all-solid-state cell stack 100, the first welding surface 230 of the first can 200 is welded to the second welding surface 330 of the second can 300 so that the all-solid-state cell stack 100 is pressed while the first can 200 and the second can 300 are welded to each other.

The first welding surface 230 includes an uneven structure IRS. An interface between the first welding surface 230 and the second welding surface 330 includes the uneven structure IRS. The uneven structure IRS of the first welding surface 230 includes a convex surface, but the present disclosure is not limited thereto, and may include various known uneven structures.

The second can 300 covers an upper portion of the all-solid-state cell stack 100. The second can 300 is combined with the first can 200 to surround the all-solid-state cell stack 100, and pressurizes the all-solid-state cell stack 100 in the third direction Z, which is the thickness direction. The second can 300 is welded to the first can 200 to press the all-solid-state cell stack 100 in a direction of the first can 200. The second can 300 may include various known metals such as stainless steel and aluminum.

The second can 300 includes a second plate portion 310, a second side wall portion 320, and a second welding surface 330.

The second plate portion 310 covers a lower portion of the all-solid-state cell stack 100. The second plate portion 310 completely covers the lower portion of the all-solid-state cell stack 100.

The second side wall portion 320 is bent and extended from the second plate portion 310 to surround the all-solid-state cell stack 100. The second welding surface 330 is positioned on the second side wall portion 320. The second side wall portion 320 is bent and extended in the third direction Z from an edge of the second plate portion 310 and surrounds a side portion of the all-solid cell stack 100. The second side wall portion 320 is welded to the first side wall portion 220 of the first can 200 by the second welding surface 330.

The second welding surface 330 extends along the second side wall portion 320. The second welding surface 330 is welded to the first welding surface 230 of the first can 200. The second welding surface 330 is welded to the first welding surface 230 of the first can 200 with the second can 300 and the first can 200 pressing the all-solid-state cell stack 100. The second welding surface 330 may be welded to the first welding surface 230 using a welding means such as a laser beam, but the present disclosure is not limited thereto, and may be welded to the first welding surface 230 using various known welding means. In a state in which the second can 300 and the first can 200 press the all-solid-state cell stack 100, the second welding surface 330 of the second can 300 is welded to the first welding surface 230 of the first can 200 so that the all-solid-state cell stack 100 is pressed while the second can 300 and the first can 200 are welded to each other.

The second welding surface 330 includes an uneven structure IRS. An interface between the second welding surface 330 and the first welding surface 230 includes the uneven structure IRS. The uneven structure IRS of the second welding surface 330 includes a convex surface, but the present disclosure is not limited thereto, and may include various known uneven structures.

In this way, in an all-solid rechargeable battery 1007 according to another embodiment, an interface between the first welding surface 230 and the second welding surface 330 includes the uneven structure IRS so that a surface area of the interface between the first welding surface 230 and the second welding surface 330 increases so that the all-solid-state cell stack 100 is firmly pressed in the third direction Z with the first can 200 and the second can 300 welded to each other, and thus even if the all-solid-state cell stack 100 is surrounded by the first can 200 and the second can 300, which have elastic restoring force due to their own strength, interface resistance of the all-solid-state cell stack 100 is minimized.

That is, even if the all-solid-state cell stack is wrapped by a can, the all-solid rechargeable battery 1007 with minimized interfacial resistance is provided.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

### [Description of symbols]

All-solid-state cell stack 100, first can 200, first plate portion 210, first welding surface 230, first non-welding surface 240, second can 300, second plate portion 310, second welding surface 330, second non-welding surface 340, first cap 400, second cap 500

## Claims

1. An all-solid rechargeable battery comprising:
an all-solid-state cell stack;
a first can configured to cover a lower portion of the all-solid-state cell stack;
a second can configured to cover an upper portion of the all-solid-state cell stack and to be welded to the first can to press the all-solid-state cell stack in a direction of the first can; and
a first cap configured to cover a first side portion of the all-solid-state cell stack and into which the first can and the second can are inserted,
wherein the first can includes:
a first welding surface welded to the second can; and
a first non-welding surface non-welded to the second can and configured to extend from the first welding surface in the direction of the first cap to be inserted into the first cap.

2. The all-solid rechargeable battery as claimed in claim 1, wherein the first non-welding surface extends at an angle away from the second can from the first welding surface.

3. The all-solid rechargeable battery as claimed in claim 1, wherein at least a portion of the first non-welding surface is in non-contact with the second can.

4. The all-solid rechargeable battery as claimed in claim 1, wherein a distance between the first non-welding surface and the second can has a first length when the all-solid-state cell stack is pressed, and if the first non-welding surface is inserted into the first cap, it has a second length that is longer than the first length due to a restoring force of the first can.

5. The all-solid rechargeable battery as claimed in claim 1, wherein the first welding surface includes an uneven structure extending in a direction of the first non-welding surface.

6. The all-solid rechargeable battery as claimed in claim 5, wherein the uneven structure of the first welding surface includes a convex surface.

7. The all-solid rechargeable battery as claimed in claim 5, wherein the uneven structure of the first welding surface includes a triangular surface.

8. The all-solid rechargeable battery as claimed in claim 1, wherein the first welding surface includes a step structure recessed from a direction of the second can.

9. The all-solid rechargeable battery as claimed in claim 8, wherein the step structure of the first welding surface includes a first blocking wall positioned between the second can and the all-solid-state cell stack.

10. The all-solid rechargeable battery as claimed in claim 1 further comprising:
a second cap configured to cover a second side portion of the all-solid-state cell stack and into which the first can and the second can are inserted.

11. The all-solid rechargeable battery as claimed in claim 10, wherein the first non-welding surface extends from the first welding surface in the direction of the second cap to be inserted into the second cap.

12. The all-solid rechargeable battery as claimed in claim 1, wherein the first can further includes:
a first plate portion configured to cover a lower portion of the all-solid-state cell stack; and
a first side wall portion bent and extended from the first plate portion to surround the all-solid-state cell stack, where the first welding surface and the first non-welding surface are positioned.

13. The all-solid rechargeable battery as claimed in claim 1, wherein the second can includes:
a second welding surface welded to the first welding surface of the first can; and
a second non-welding surface non-welded to the first non-welding surface of the first can and configured to extend from the second welding surface in the direction of the first cap to be inserted into the first cap.

14. The all-solid rechargeable battery as claimed in claim 13, wherein the second non-welding surface extends at an angle away from the first non-welding surface of the first can.

15. The all-solid rechargeable battery as claimed in claim 13, wherein at least a portion of the second non-welding surface is in non-contact with the first non-welding surface of the first can.

16. The all-solid rechargeable battery as claimed in claim 13, wherein a distance between the second non-welding surface and the first non-welding surface has a first length when the all-solid-state cell stack is pressed, and if the second non-welding surface and the first non-welding surface are inserted into the first cap, it has a second length that is longer than the first length due to a restoring force of the second can and the first can.

17. The all-solid rechargeable battery as claimed in claim 13, wherein an interface between the second welding surface and the first welding surface includes an uneven structure extending in the direction of the first cap.

18. The all-solid rechargeable battery as claimed in claim 13, wherein the second welding surface includes a step structure recessed from the direction of the first can.

19. The all-solid rechargeable battery as claimed in claim 18, wherein the step structure of the second welding surface includes a second blocking wall positioned between the first can and the all-solid-state cell stack.

20. The all-solid rechargeable battery as claimed in claim 13, wherein the second can includes:
a second plate portion configured to cover an upper portion of the all-solid-state cell stack; and
a second side wall portion bent and extended from the second plate portion to surround the all-solid-state cell stack, where the second welding surface and the second non-welding surface are positioned.
